(19) **Europäisches Patentamt / European Patent Office / Office européen des brevets**

(11) **EP 3 196 621 A1**

(12) **EUROPEAN PATENT APPLICATION**
published in accordance with Art. 153(4) EPC

(43) Date of publication:
26.07.2017 Bulletin 2017/30

(21) Application number: 15841874.9

(22) Date of filing: 07.09.2015

(51) Int Cl.:
*G01L 25/00* (2006.01)   *G01L 3/10* (2006.01)

(86) International application number:
PCT/JP2015/075353

(87) International publication number:
WO 2016/043085 (24.03.2016 Gazette 2016/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 17.09.2014 JP 2014189111

(71) Applicant: KYB Corporation
Tokyo 105-6111 (JP)

(72) Inventor: YAMADA, Ryota
Tokyo 105-6111 (JP)

(74) Representative: Grünecker Patent- und
Rechtsanwälte
PartG mbB
Leopoldstraße 4
80802 München (DE)

(54) **DISPLACEMENT SENSOR INSPECTION DEVICE AND INSPECTION METHOD FOR SAME**

(57) An inspection device (100) for displacement sensor includes a sequence data obtaining unit (S1) configured to provide an input continuously changing in a constant temporal gradient to the displacement sensor (1) to obtain sequence data for an output value; a difference calculation unit (S2) configured to obtain a difference between a value at a certain point in the sequence data and a value at a point advancing from the point by a predetermined evaluation pitch regarding each point in the sequence data to calculate difference sequence data ; a moving average calculation unit (S3,S4) configured to obtain a moving average of a predetermined number of data centered at a certain point in the difference sequence data regarding each point in the difference sequence data to calculate post-averaged sequence data ; and a determining unit (S6) configured to determine that the displacement sensor (1) is normal when an amplitude of an output value of the post-averaged sequence data is smaller than a determination threshold for amplitude.

```
        START
          │
S1 ┌──────────────────────┐
   │  Obtain sequence data │
   └──────────────────────┘
          │
S2 ┌────────────────────────────────┐
   │ Perform evaluation for local linearity │
   └────────────────────────────────┘
          │
S3 ┌────────────────────────┐
   │   Perform LPF processing  │
   │     by moving average     │
   └────────────────────────┘
          │
S4 ┌──────────────────────────────────────────────┐
   │      Perform extraction processing              │
   │ of extremely low-frequency component by moving average │
   └──────────────────────────────────────────────┘
          │
S5 ┌────────────────────────────┐
   │  Perform pseudo-HPF processing │
   │     by waveform calculation    │
   └────────────────────────────┘
          │
S6 ┌────────────────────────────┐
   │  Perform waveform evaluation   │
   └────────────────────────────┘
          │
         END
```

FIG.2

**Description**

TECHNICAL FIELD

The present invention relates to an inspection device for displacement sensor and an inspection method of the same.

BACKGROUND ART

JP2008-114612A discloses an electric power steering device in which a steering torque given to a steering wheel is detected by a torque sensor. The torque sensor detects a torsion angle displacement of a torsion bar interposed between an input shaft and an output shaft by a potentiometer and detects the steering torque based on the detected value. The detected steering torque is used for a feedback control of a current supplied to an electric motor, which gives a steering assist power to a steering system.

SUMMARY OF INVENTION

With the conventional technique, the potentiometer functions as a sensor for feedback. In the potentiometer, a voltage as an output value increases in proportion to an increase in torsion angle displacement as an input value. That is, the potentiometer has linearity output characteristics.

However, due to an influence from, for example, a noise caused by a sliding resistance of the potentiometer, the output characteristics of the potentiometer actually include a non-linearity error. Due to this non-linearity error, the potentiometer outputs a value shifted from an ideal approximate straight line as the output value.

Since the non-linearity error possibly includes periodic variations, when the potentiometer is used as the sensor for feedback, a component in a specific period possibly causes a system oscillation.

In contrast to this, it is considered that, using a Fast Fourier Transform (FFT) or a similar transformation, an inspection device to analyze the specific periodic variations included in the output characteristics of the potentiometer inspects the potentiometer. However, since the device and the software for analysis are advanced, a cost for this inspection device is expensive and therefore is not easily performed.

An object of the present invention is to provide an inspection device for displacement sensor that can inspect a specific periodic variation included in output characteristics of a displacement sensor at a low cost and an inspection method thereof.

According to one aspect of the present invention, an inspection device for a displacement sensor for inspecting a periodic variation included in an output characteristic of the displacement sensor, the inspection device for the displacement sensor includes a sequence data obtaining unit configured to obtain sequence data as an output value of the displacement sensor caused by input continuously changing in a constant temporal gradient to the displacement sensor; a difference calculation unit configured to obtain a difference between a value at a certain point in the sequence data and a value at a point advancing from the point by a predetermined evaluation pitch regarding each point in the sequence data to calculate difference sequence data ; a moving average calculation unit configured to obtain a moving average of a predetermined number of data centered at a certain point in the difference sequence data regarding each point in the difference sequence data to calculate post-averaged sequence data ; and a determining unit configured to determine that the displacement sensor is normal when an amplitude of an output value of the post-averaged sequence data is smaller than a determination threshold for amplitude.

BRIEF DESCRIPTION OF DRAWINGS

FIG. 1 is a block diagram illustrating a state where an inspection device for potentiometer according to an embodiment of the present invention is coupled to an electric power steering device.
FIG. 2 is a flowchart illustrating a processing content of a controller.
FIG. 3A is a chart plotting sequence data.
FIG. 3B is a chart plotting a linearity evaluation sequence.
FIG. 3C is a chart plotting a low-frequency component extraction sequence and an extremely low-frequency component sequence.
FIG. 3D is a chart plotting a target frequency extraction sequence.
FIG. 4A is a chart illustrating a frequency property of the sequence data.
FIG. 4B is a chart illustrating a frequency property of the extremely low-frequency component sequence.

FIG. 4C is a chart illustrating a multiplication of the charts in FIG. 4A and FIG. 4B.

FIG. 4D is a chart illustrating the frequency property of the target frequency extraction sequence.

## DESCRIPTION OF EMBODIMENTS

The following describes an embodiment of the present invention with reference to the accompanying drawings.

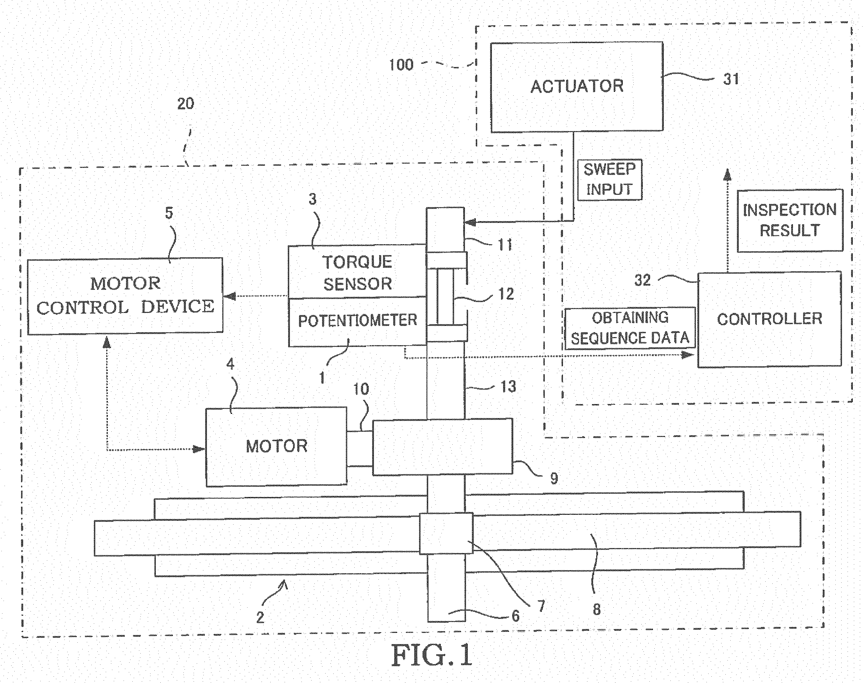

FIG. 1 is a block diagram illustrating a state where an inspection device 100 for a potentiometer 1 according to the embodiment is coupled to an electric power steering device 20.

The electric power steering device 20 includes a steering mechanism 2, a torque sensor 3, an electric motor 4, and a motor control device 5. The steering mechanism 2 is coupled to a steering wheel (not illustrated) to steer wheels (not illustrated). The torque sensor 3 detects an input torque. The electric motor 4 gives an assist torque to the steering mechanism 2. A detection signal by the torque sensor 3 is input to the motor control device 5. The motor control device 5 is configured to control an output from the electric motor 4.

The steering mechanism 2 includes a steering shaft 6 coupled to the steering wheel, a pinion 7 formed on the steering shaft 6, and a rack 8 meshing with the pinion 7. A rotation of the steering shaft 6 rotates the pinion 7, and the rack 8, which meshes with the pinion 7, moves in an axial direction (a right-left direction of a vehicle). Then, the wheels are steered via a tie rod (not illustrated) coupled to the rack 8.

The steering mechanism 2 further includes a worm wheel 9 coupled to the steering shaft 6 and a worm 10 meshing with the worm wheel 9. The worm 10 is coupled to an output shaft of the electric motor 4. Rotatably driving the worm 10 by the electric motor 4 rotatably drives the worm wheel 9. Thus, the assist torque is given to the steering shaft 6.

The torque sensor 3 is interposed in the middle of the steering shaft 6 to detect the input torque given to the steering shaft 6 by a driver via the steering wheel. The steering shaft 6 is constituted of an input shaft 11 coupled to the steering wheel, a torsion bar 12 whose one end is coupled to the input shaft 11, and an output shaft 13 coupled to the other end of the torsion bar 12.

The torque sensor 3 is constituted of the potentiometer 1 as a displacement sensor. The torque sensor 3 detects a torsion angle displacement of the torsion bar 12 caused by the steering torque given to the steering shaft 6 via the steering wheel. The potentiometer 1 outputs a voltage signal according to the torsion angle displacement of the torsion bar 12 to the motor control device 5.

The motor control device 5 calculates the appropriate assist torque based on the voltage signal input from the torque sensor 3 and performs a feedback control on a current applied to the electric motor 4.

The inspection device 100 for the potentiometer 1 includes an actuator 31 and a controller 32. The actuator 31 is configured to give the steering torque for inspection to the input shaft 11. The controller 32 is configured to receive the signal output from the potentiometer 1 and perform an arithmetic operation of the signal. The inspection device 100 for the potentiometer 1 is used to inspect the potentiometer 1 for normal operation before the electric power steering device 20 is produced and shipped at a plant.

Next, the following describes an inspection procedure by the inspection device 100 for the potentiometer 1.

First, the controller 32 is coupled to the potentiometer 1 of the electric power steering device 20. Furthermore, the actuator 31 is coupled to the input shaft 11 so as to ensure giving the input torque.

Subsequently, the actuator 31 gives the input torque to the input shaft 11 and the controller 32 performs the arithmetic operation. The actuator 31 provides a sweep input that continuously changes in a constant temporal gradient to the input shaft 11.

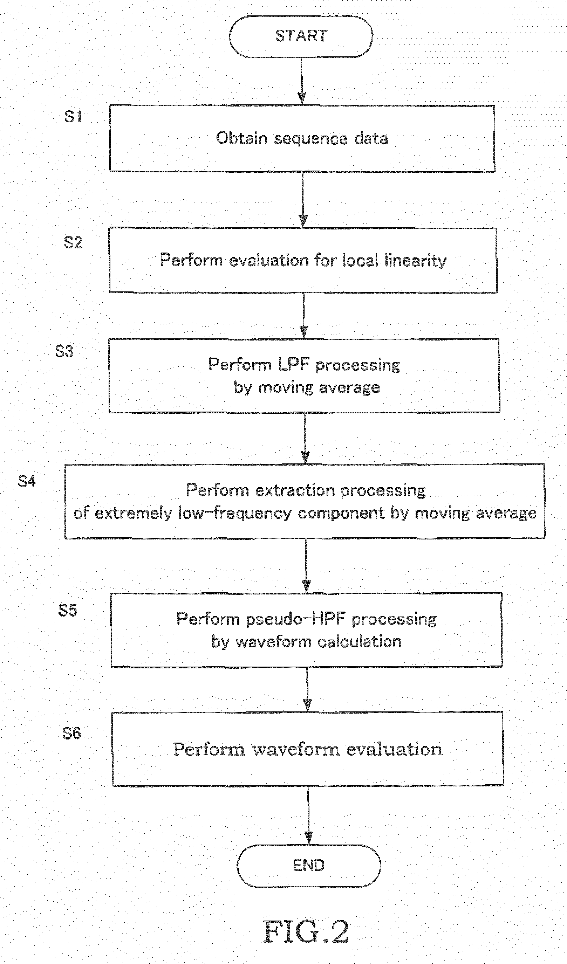

FIG. 2 is a flowchart illustrating a processing content by the controller 32.

At Step S1 serving as a sequence data obtaining unit, the controller 32 obtains sequence data Vm (T) of an output value as a voltage value output according to the sweep input. A sampling frequency Fs (time/Nm) of the sweep input is set to a value sufficiently higher than a frequency used for normal determination by the potentiometer 1.

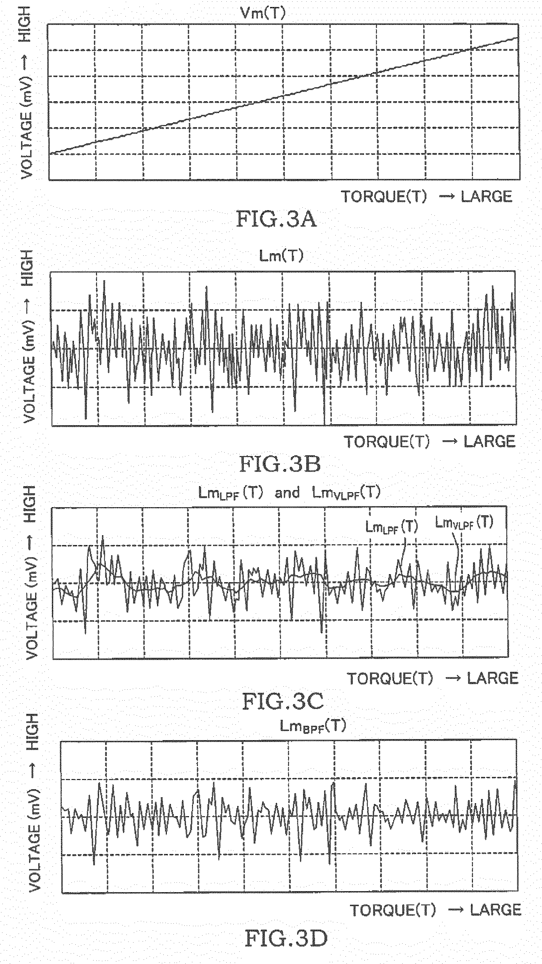

FIG. 3A is a chart plotting the sequence data Vm (T) with the input torque (T) as the horizontal axis and the output voltage (V) as the vertical axis. The potentiometer 1 is a primary linear output sensor. The sequence data Vm (T) has linearity where the output voltage increases in proportion to the increase in input torque.

With the scale in FIG. 3A, it seems that the sequence data Vm (T) has the almost perfect linearity. However, due to an influence from, for example, a noise generated in a slider inside the potentiometer 1, a value of the output voltage at a certain input torque is actually output higher or lower than an ideal value. In view of this, the chart in FIG. 3A includes a slight displacement of amplitude in a vertical direction (This is hereinafter referred to as a "non-linearity error").

The non-linearity error alone leads to deterioration in accuracy of sensing of the output value at each point by the potentiometer 1. Furthermore, when the non-linearity error has periodicity, the following problem occurs. That is, the motor control device 5 performs the feedback control on the current applied to the electric motor 4 based on the voltage signal input from the torque sensor 3. Accordingly, the periodic variations of the voltage signal possibly cause a system oscillation in the feedback control system. Especially, to improve steering feeling or responsiveness during an assist control of a steering assist torque, in the case where a gain of the torque sensor 3 is increased to increase sensitivity of the feedback control system, the system oscillation possibly occurs.

Therefore, in this embodiment, the inspection device 100 extracts a periodic variation component included in the sequence data Vm (T) and determines whether the non-linearity error is within an allowable range, thus a quality management of the potentiometer 1 is performed.

Returning to FIG. 2, at Step S2 serving as a difference calculation unit, the controller 32 performs an evaluation for local linearity. The evaluation for local linearity is processing to extract an inclination of output at a certain output evaluation point with a point away by an evaluation pitch $N_{LIN}$. Specifically, based on the following formula (1), the controller 32 calculates a difference between Vm (n), an n-th (n = 1, 2, 3, and so on) value of the sequence data Vm (T), and Vm (n+$N_{LIN}$), a value at a point advancing from the n-th point by the predetermined evaluation pitch $N_{LIN}$, to derive a linearity evaluation sequence Lm (T).

$$\text{Lm (n)} = \text{Vm (n} + N_{LIN}) - \text{Vm (n)} \bullet\bullet\bullet \text{(1)}$$

A ramp component of the sequence data Vm (T) is superimposed as an offset, when the linearity evaluation sequence Lm (T) is calculated. Because of this, an average value of the sequence data obtained after the difference calculation is subtracted from each point of the data obtained after the difference calculation. Thus obtained values is set as the linearity evaluation sequence Lm (T). It should be noted that, the evaluation pitch $N_{LIN}$ is a value smaller than the sampling frequency Fs and is, for example, set to 1/10 of the sampling frequency Fs.

FIG. 3B is a chart plotting the linearity evaluation sequence Lm (T) with the input torque (T) as the horizontal axis and the output voltage (mV) as the vertical axis. If the sequence data Vm (T) is the ideal ramp property, the chart in FIG. 3B is drawn as the constant straight line. However, since the sequence data Vm (T) actually includes the non-linearity error, the sequence data Vm (T) draws the chart varying vertically as illustrated in FIG. 3B.

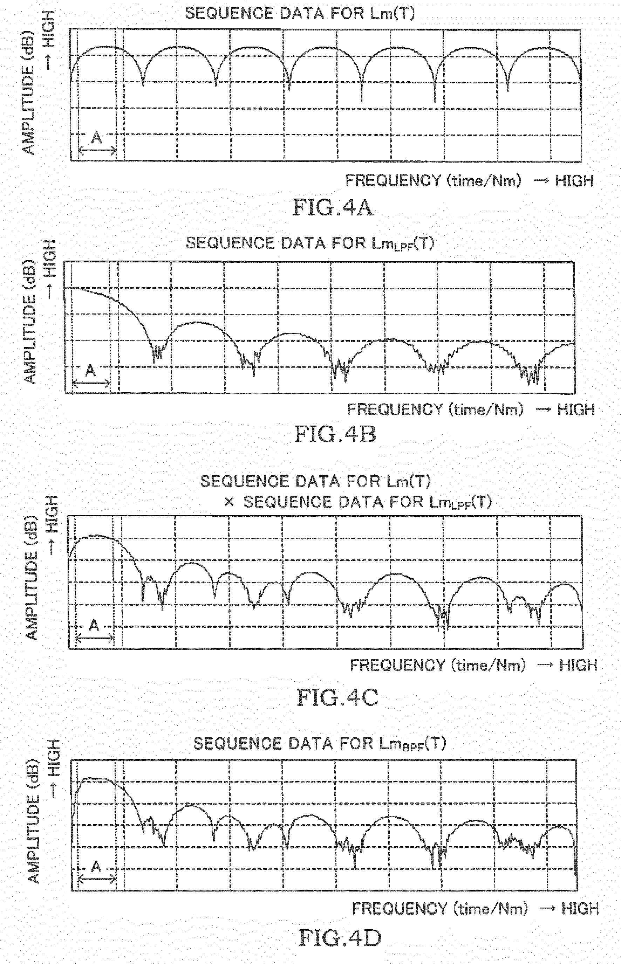

FIG. 4A is a chart plotting the sequence data for linearity evaluation sequence Lm (T) with the frequency (time/Nm) as the horizontal axis and the amplitude (dB) as the vertical axis, and illustrates the frequency property of the chart in FIG. 3B. As illustrated in FIG. 4A, the sequence data for the linearity evaluation sequence Lm (T) is expressed as a property having amplification peaks at predetermined periods.

Here, a frequency region A illustrated in FIG. 4A is set to a frequency for an evaluation target of the potentiometer 1. The frequency region A to be the evaluation target needs to be set as necessary according to an oscillation phenomenon caused by a combination of the type of the potentiometer 1 and the type of the electric power steering device 20 to which the potentiometer 1 is mounted. Therefore, input-output characteristics of the potentiometer 1 are analyzed by another analysis device and the frequency region A to be the evaluation target by the inspection device 100 is set preliminary based on the result. Furthermore, the evaluation pitch $N_{LIN}$ is set such that a primary amplification peak frequency falls within the frequency region A in FIG. 4A.

Returning to FIG. 2, at Step S3 serving as a first moving average calculation unit, the controller 32 performs low-pass filter (LPF) processing by moving average. Specifically, the controller 32 calculates the moving average of predetermined number $N_{LPF}$ points about the n-th (n = 1, 2, 3, and so on) data Lm (n) based on the following formula (2) to derive a low-frequency component extraction sequence $Lm_{LPF}$ (T).

$$\text{Lm}_{LPF} \text{(n)} = (\text{Lm (n} - N_{LPF}/2) + ... + \text{Lm (n)} + ... + \text{Lm (n} + N_{LPF}/2 - 1))/N_{LPF} \bullet\bullet\bullet \text{(2)}$$

It should be noted that, the predetermined number $N_{LPF}$ is set to a value to the extent that the high-frequency components of the linearity evaluation sequence Lm (T) can be efficiently attenuated.

FIG. 3C is a chart plotting the low-frequency component extraction sequence $Lm_{LPF}$ (T) with the input torque (T) as the horizontal axis and the output voltage (mV) as the vertical axis. As illustrated in FIG. 3C, the low-frequency component extraction sequence $Lm_{LPF}$ (T) lowers the high-frequency components compared with the linearity evaluation sequence Lm (T), which is illustrated in FIG. 3B, by the LPF processing by the moving average.

FIG. 4B is a chart plotting the sequence data for the low-frequency component extraction sequence $Lm_{LPF}$ (T) with the frequency (time/Nm) as the horizontal axis and the amplitude (dB) as the vertical axis. FIG. 4B illustrates the frequency property of the chart for the low-frequency component extraction sequence $Lm_{LPF}$ (T) in FIG. 3C. As illustrated in FIG. 4B, the low-frequency component extraction sequence $Lm_{LPF}$ (T) substantially lowers the high-frequency components compared with the linearity evaluation sequence Lm (T), which is illustrated in FIG. 4A.

Returning to FIG. 2, at Step S4 serving as a second moving average calculation unit, the controller 32 performs extraction processing of an extremely low-frequency component by the moving average. Specifically, the controller 32 calculates the moving average of predetermined number $N_{VLPF}$ points about the n-th (n = 1, 2, 3, and so on) data $Lm_{LPF}$ (n) based on the following formula (3) to derive an extremely low-frequency component sequence $Lm_{VLPF}$ (T).

$$Lm_{VLPF}(n) = (Lm_{LPF}(n - N_{VLPF}/2) + ... + Lm_{LPF}(n) + ... + Lm_{LPF}(n +$$

$$N_{VLPF}/2 - 1))/N_{VLPF} \bullet\bullet\bullet (3)$$

It should be noted that, the predetermined number $N_{VLPF}$ is a value larger than the predetermined number $N_{LPF}$ and set to a value to the extent that the high-frequency components of the low-frequency component extraction sequence $Lm_{LPF}$ (T) can be efficiently attenuated.

As illustrated in FIG. 3C, the extremely low-frequency component sequence $Lm_{VLPF}$ (T) further lowers the high-frequency components compared with the low-frequency component extraction sequence $Lm_{LPF}$ (T).

FIG. 4C is a chart illustrating a multiplication of the evaluation for local linearity processing illustrated in FIG. 4A and the LPF processing illustrated in FIG. 4B. In the chart illustrated in FIG. 4C, the low-frequency components are superimposed at a comparatively larger amplitude compared with the frequency region A as the evaluation target. Since the low-frequency components become the noise in the local linearity inspection of the potentiometer 1, processing at Step S5, which will be described later, to remove the low-frequency components is performed.

Returning to FIG. 2, at Step S5 serving as a moving average subtraction unit, the controller 32 performs pseudo-high-pass filter (HPF) processing by waveform calculation. Specifically, the controller 32 subtracts the extremely low-frequency component sequence $Lm_{VLPF}$ (T) from the low-frequency component extraction sequence $Lm_{LPF}$ (T) based on the following formula (4) to derive a target frequency extraction sequence $Lm_{BPF}$ (T).

$$Lm_{BPF}(n) = Lm_{LPF}(n) - Lm_{VLPF}(n) \bullet\bullet\bullet (4)$$

FIG. 3D is a chart plotting the target frequency extraction sequence $Lm_{BFF}$ (T) with the input torque (T) as the horizontal axis and the output voltage (mV) as the vertical axis. FIG. 4D is a chart plotting the sequence data for the extremely low-frequency component sequence $Lm_{VLPF}$ (T) with the frequency (time/Nm) as the horizontal axis and the amplitude (dB) as the vertical axis. FIG. 4D illustrates the frequency property of the chart for the target frequency extraction sequence $Lm_{BPF}$ (T) in FIG. 3D.

As illustrated in FIG. 4D, the target frequency extraction sequence $Lm_{BPF}$ (T) has the smaller amplitude on the low-frequency side with respect to the frequency region A by the pseudo-HPF processing compared with the frequency property of the extremely low-frequency component sequence $Lm_{VLPF}$ (T) illustrated in FIG. 4C.

That is, the processing at Steps S3 to S5 performs band pass filter processing on the linearity evaluation sequence Lm (T) to extract an inspection target waveform where the component other than the frequency region A as the inspection target is attenuated.

Returning to FIG. 2, at Step S6 serving as a determining unit, the controller 32 performs the waveform evaluation. Specifically, in the chart for the target frequency extraction sequence $Lm_{BPF}$ (T), which is illustrated in FIG. 3D, the controller 32 calculates a peak-to-peak value, a difference between a maximum value and a minimum value of the amplitude. In the case where the peak-to-peak value is smaller than a predetermined threshold, the controller 32 determines that the operation of the potentiometer 1 is normal. The predetermined threshold is preset to a value to the extent that the system oscillation does not occur in the feedback control system.

Summarizing the above-described controls, the controller 32 gives the sweep input to the input shaft 11 and performs the linearity evaluation of the sequence data for the output voltage obtained from the potentiometer 1. Then, the controller 32 performs the filtering processing of the low-frequency component and the high-frequency component to extract the frequency components in the frequency region A, the inspection target, among the non-linearity error. Furthermore, the controller 32 inspects whether the potentiometer 1 is normal based on the peak-to-peak value of the inspection target waveform remaining the last.

The above-described embodiment provides the following effects.

A linearity evaluation is performed on the sequence data for output voltage of the potentiometer 1 by calculating, for every point, the difference between the data at the points separated by the predetermined evaluation pitch $N_{LIN}$. Further, performing the moving average processing reduces the frequency components outside the frequency region A, the inspection target, among the non-linearity errors. This allows the extraction of the inspection target waveform in combination with the difference and the moving average. That is, this allows a detection of the specific periodic variation among the sequence data for output values from the displacement sensor in combination with the difference and the moving average, thereby ensuring determining abnormality of the displacement sensor by simple arithmetic operation. This eliminates the need for advanced device and software for analysis, ensuring the inspection of the potentiometer 1 at a low price.

Furthermore, the moving average of the predetermined number $N_{LPF}$ points in the linearity evaluation sequence Lm (T) obtained after the difference calculation is operated to derive the low-frequency component extraction sequence $Lm_{LPF}$ (T). This ensures removing the high-frequency components from the frequency region A, the inspection target, with more certainty. This allows preventing an erroneous determination of the waveform evaluation due to the noise.

Furthermore, the extremely low-frequency component sequence $Lm_{VLPF}$ (T) obtained after the second moving average processing at Step S4 is subtracted from the low-frequency component extraction sequence $Lm_{LPF}$ (T) obtained after the first moving average processing at Step S3 to derive the target frequency extraction sequence $Lm_{BPF}$ (T). This ensures removing the low-frequency components from the frequency region A, the inspection target, ensuring preventing the erroneous determination of the waveform evaluation due to the noise.

Furthermore, regarding the linearity evaluation sequence Lm (T), in addition to the calculation, for every point, the difference between the data at the points separated the predetermined evaluation pitch $N_{LIN}$, the average value of the sequence data obtained after the difference calculation is subtracted from the data at each point. Thus, the value is set as the linearity evaluation sequence Lm (T). This ensures canceling the ramp component superimposed as the offset to the sequence data Vm (T). Accordingly, accuracy of the inspection target waveform extracted by the subsequent LPF processing and HPF processing can be improved. This allows the inspection accuracy of the potentiometer 1 to be improved.

Furthermore, in the chart for the target frequency extraction sequence $Lm_{BPF}$ (T), in the case where the peak-to-peak value, the difference between the maximum value and the minimum value of the amplitude, is smaller than the predetermined threshold, the operation of the potentiometer 1 is determined as normal. Accordingly, even if the potentiometer 1 has the non-linear property where the output voltage becomes locally prominent at a specific input torque, the non-linear property can be reflected to the waveform evaluation. This ensures improving the inspection accuracy of the potentiometer 1.

Embodiments of this invention were described above, but the above embodiments are merely examples of applications of this invention, and the technical scope of this invention is not limited to the specific constitutions of the above embodiments.

For example, the embodiment describes the potentiometer 1 as the example of the displacement sensor. However, the embodiment is applicable to another displacement sensor such as a linear encoder.

Furthermore, the embodiment performs the HPF processing at Step S5. However, when the low-frequency components need not to be eliminated from the frequency region A, the inspection target, the HPF processing may be omitted.

Furthermore, the embodiment performs the LPF processing by the moving average once from Steps S3 to S4 to remove the high frequencies. However, the LPF processing may be performed twice or more to remove the high-frequency components with more certainty.

Furthermore, the embodiment determines whether the potentiometer 1 is normal based on the peak-to-peak value, which is the difference between the maximum value and the minimum value of the amplitude, in the chart for the target frequency extraction sequence $Lm_{BPF}$ (T) at Step S6. However, for example, the embodiment may perform the determination based on a value other than the peak-to-peak value, for example, an average value of absolute values of the amplitude in the chart for the target frequency extraction sequence $Lm_{BPF}$ (T).

Furthermore, the embodiment subtracts the average value of the sequence data obtained after the difference calculation from the data at each point and sets the average value as the linearity evaluation sequence Lm (T) to cancel the ramp component superimposed as the offset to the sequence data Vm (T). However, this subtraction processing may not be performed in the case where the ramp component needs not to be canceled.

Furthermore, the embodiment determines whether the potentiometer 1 is normal with the potentiometer 1 mounted to the electric power steering device 20; however, the similar inspection may be performed on the potentiometer 1 alone.

This application claims priority based on Japanese Patent Application No.2014-189111 filed with the Japan Patent Office on September 17, 2014, the entire contents of which are incorporated into this specification.

**Claims**

1. An inspection device for a displacement sensor for inspecting a periodic variation included in an output characteristic of the displacement sensor, the inspection device for the displacement sensor comprising:

   a sequence data obtaining unit configured to obtain sequence data as an output value of the displacement sensor according to input continuously changing in a constant temporal gradient;

a difference calculation unit configured to obtain a difference between a value at a certain point in the sequence data and a value at a point advancing from the point by a predetermined evaluation pitch regarding each point in the sequence data to calculate difference sequence data;

a moving average calculation unit configured to obtain a moving average of a predetermined number of data centered at a certain point in the difference sequence data regarding each point in the difference sequence data to calculate post-averaged sequence data ; and

a determining unit configured to determine that the displacement sensor is normal when an amplitude of an output value of the post-averaged sequence data is smaller than a determination threshold for amplitude.

2. The inspection device for displacement sensor according to claim 1, wherein:

the moving average calculation unit includes:

a first moving average calculation unit configured to obtain a moving average of a first number of data about a certain point in the difference sequence data at each point in the difference sequence data to calculate first post-averaged sequence data; and

a second moving average calculation unit configured to obtain a moving average of a second number of data about a certain point in the first post-averaged sequence data at each point in the first post-averaged sequence data to calculate second post-averaged sequence data, the second number of data being larger than the first number of data,

a moving average subtraction unit is further provided, the moving average subtraction unit being configured to subtract each point in the second post-averaged sequence data from each point in the first post-averaged sequence data to calculate post-subtraction sequence data, and

the post-subtraction sequence data is set as the post-averaged sequence data.

3. The inspection device for displacement sensor according to claim 1, wherein the difference calculation unit is configured to newly set sequence data obtained by a subtracting an average value of the difference sequence data from each point in the difference sequence data as the difference sequence data.

4. The inspection device for displacement sensor according to claim 1, wherein when a difference between a maximum value and a minimum value of the amplitude of the output value in the post-averaged sequence data is smaller than a determination threshold for peak, the determining unit is configured to determine that the displacement sensor is normal.

5. The inspection device for displacement sensor according to claim 1, wherein the displacement sensor is a potentiometer configured to output a voltage in response to a torque input.

6. An inspection method for displacement sensor for inspecting a periodic variation included in an output characteristic of a displacement sensor, the inspection method for displacement sensor comprising:

obtaining sequence data as an output value of the displacement sensor according to input continuously changing in a constant temporal gradient;

obtaining a difference between a value at a certain point in the sequence data and a value at a point advancing from the point by a predetermined evaluation pitch regarding each point in the sequence data to calculate difference sequence data;

obtaining a moving average of a predetermined number of data centered at a certain point in the difference sequence data regarding each point in the difference sequence data to calculate post-averaged sequence data; and

determining that the displacement sensor is normal when a peak-to-peak value of an output value of the post-averaged sequence data is smaller than a normal determination threshold.

FIG.1

START

S1　Obtain sequence data

S2　Perform evaluation for local linearity

S3　Perform LPF processing
by moving average

S4　Perform extraction processing
of extremely low-frequency component by moving average

S5　Perform pseudo-HPF processing
by waveform calculation

S6　Perform waveform evaluation

END

FIG.2

FIG.3A

FIG.3B

FIG.3C

FIG.3D

SEQUENCE DATA FOR Lm(T)

AMPLITUDE (dB) → HIGH

A

FREQUENCY (time/Nm) → HIGH

FIG.4A

SEQUENCE DATA FOR $Lm_{LPF}(T)$

AMPLITUDE (dB) → HIGH

A

FREQUENCY (time/Nm) → HIGH

FIG.4B

SEQUENCE DATA FOR Lm(T)
× SEQUENCE DATA FOR $Lm_{LPF}(T)$

AMPLITUDE (dB) → HIGH

A

FREQUENCY (time/Nm) → HIGH

FIG.4C

SEQUENCE DATA FOR $Lm_{BPF}(T)$

AMPLITUDE (dB) → HIGH

A

FREQUENCY (time/Nm) → HIGH

FIG.4D

## INTERNATIONAL SEARCH REPORT

| International application No. |
|---|
| PCT/JP2015/075353 |

A. CLASSIFICATION OF SUBJECT MATTER
*G01L25/00*(2006.01)i, *G01L3/10*(2006.01)i

According to International Patent Classification (IPC) or to both national classification and IPC

B. FIELDS SEARCHED

Minimum documentation searched (classification system followed by classification symbols)
G01L25/00, G01L3/10, G01B7/00, B62D5/04

Documentation searched other than minimum documentation to the extent that such documents are included in the fields searched
Jitsuyo Shinan Koho        1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-236062 A  (Koyo Seiko Co., Ltd.), 23 August 2002 (23.08.2002), paragraphs [0001], [0021] to [0026]; fig. 1 to 3 (Family: none) | 1-6 |
| A | JP 2002-79952 A  (Koyo Seiko Co., Ltd.), 19 March 2002 (19.03.2002), paragraphs [0001] to [0005], [0034] to [0037]; fig. 3 to 5 (Family: none) | 1-6 |

☒  Further documents are listed in the continuation of Box C.          ☐   See patent family annex.

| | |
|---|---|
| *    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>27 October 2015 (27.10.15) | Date of mailing of the international search report<br>02 November 2015 (02.11.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

## INTERNATIONAL SEARCH REPORT

International application No.

PCT/JP2015/075353

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-324622 A  (NSK Ltd.),<br>24 November 2005 (24.11.2005),<br>paragraphs [0001], [0010] to [0012], [0029],<br>[0035]; fig. 6<br>& US 2005/264248 A1<br>paragraphs [0002], [0012] to [0017], [0045],<br>[0051]; fig. 6<br>& EP 1595767 A2<br>paragraphs [0001], [0010] to [0015], [0034],<br>[0040]; fig. 6<br>& DE 602005003865 T2 | 1-6 |

Form PCT/ISA/210 (continuation of second sheet) (July 2009)

**EP 3 196 621 A1**

REFERENCES CITED IN THE DESCRIPTION

**Patent documents cited in the description**

- JP 2008114612 A
- JP 2014189111 A